**Europäisches Patentamt**

**European Patent Office**

**Office européen des brevets**

(19)

(11) Veröffentlichungsnummer: **0 124 628**
**A1**

(12) # EUROPÄISCHE PATENTANMELDUNG

(21) Anmeldenummer: **83104397.1**

(22) Anmeldetag: **04.05.83**

(51) Int. Cl.³: **A 01 F 12/40**
**A 01 F 7/06**

(43) Veröffentlichungstag der Anmeldung:
**14.11.84 Patentblatt 84/46**

(84) Benannte Vertragsstaaten:
**BE DE FR GB IT**

(71) Anmelder: **Klöckner-Humboldt-Deutz AG**
**Zweigniederlassung Fahr**

**D-7702 Gottmadingen(DE)**

(72) Erfinder: **Ahle, Josef**

**D-8881 Kicklingen 29(DE)**

(74) Vertreter: **Haft, Berngruber, Czybulka**
**Hans-Sachs-Strasse 5**
**D-8000 München 5(DE)**

(54) **Mähdrescher mit Axialdreschmaschine.**

(57) Der Mähdrescher mit Axialdreschmaschine (5) weist eine Mähvorrichtung (2) auf, eine sich daran anschließenden Förderer (3) für das geschnittene Erntegut, eine in einem Trommelgehäuse (9) angeordnete rotierende Dresch- und Trenntrommel (6) zum Axialdrusch des Erntegutes, eines Einbringvorrichtung (4) zum Einbringen des vom Förderer (3) angelieferten Erntegutes in das Trommelgehäuse (9) und eine der Dresch- und Trenntrommel (6) nachgeordnete Häckseleinrichtung (27) mit einem Gebläserad (26) wobei letztere koaxial zur und drehbar auf der Rotorwelle (42) derart angeordnet sind, daß die Häckselanordnung (27) mit einem eigenen Antrieb versehen ist zur Erzielung unterschiedlicher Drehzahlen bezüglich der Trommel.

Fig.1

EP 0 124 628 A1

Die vorliegende Erfindung betrifft einen Mähdrescher mit Axialdreschmaschine mit einer Mähvorrichtung, einer sich daran anschließenden Fördereinrichtung für das geschnittene Erntegut , einer in einem Trommelgehäuse angeordneten , rotierenden Dresch- und Trenntrommel zum Axialdrusch des Erntegutes, einer Einbringvorrichtung zum Einbringen des vom Förderer angelieferten Erntegutes in das Trommelgehäuse, einer der Dresch- und Trenntrommel nachgeordneten Häckseleinrichtung sowie einem Gebläserad zum Auswerfen des ausgedroschenen Erntegutes.

Bei derartigen Mähdeschern wird das Erntegut, z.B. Getreide, mit einem Schneidwerk geschnitten und anschließend über ein Fördersystem der Dresch- und Trenneinrichtung der Axialdreschmaschine zugeführt. Diese weist üblicherweise eine in Längsrichtung angeordnete Dresch- und Trenntrommel auf, in der das geschnittene Erntegut in Schraubenlinien um einen Rotor geführt und mit Hilfe von Dreschorganen ausgedroschen wird. Das ausgedroschene und noch Spreu sowie andere kleine Verunreinigungen enthaltende Korngut fällt durch einen Dreschkorb auf einen Vorbereitungsboden unterhalb der Dreschtrommel , wohingegen das Stroh in Richtung auf das hintere Ende der Dreschtrommel geführt wird. Im Stroh enthaltenes Korngut fällt durch Trennsiebe ebenfalls auf den Stufenboden oder direkt auf die Reinigungssicke. Auf dem Vorbereitungsboden wird das noch verunreinigte Korngut durch Rüttelbewegungen in Richtung auf dessen Ende transportiert, von wo es nach unten auf eine Siebanordnung fällt. Die Siebanordnung wird von einem Luftstrom eines Reinigungsgebläses durchblasen, durch den die noch in dem Korngut enthaltenen Verunreinigungen , wie Spreu etc., erfaßt und ausgeblasen werden. Das dabei die Siebe durchfallende gereinigte Korngut wird gesammelt und mit einem Körnerelevator in einen Korntank überführt.

Aus der DE-OS 28 35 899 ist ein Mähdrescher mit Axialdreschmaschine bekannt. Bei diesem bekannten Mähdrescher wird der Hauptanteil des ausgedroschenen Erntegutes durch den konischen Zwischenraum zwischen der Dreschtrommel und der Trenntrommel zum rückwärtigen Teil der Maschine geleitet, wo es in ein Austraggehäuse gelangt und von Häckselelementen erfaßt wird. Ein Teil des ausgedroschenen Erntegutes wird direkt in ein Gebläsegehäuse geleitet und von dem im Gehäuse angeordneten Gebläserad erfaßt, dessen Drehzahl höher als die Drehzahl der Dreschtrommel ist um dergestalt das ausgedroschene Erntegut zu beschleunigen, bis es etwa die gleiche Umfangsgeschwindigkeit wie die Dreschtrommel aufweist, so daß es beim Verlassen des Gebläsegehäuses eine tangentiale Geschwindigkeit aufweist, die in etwa der Geschwindigkeitskomponente des inneren Teils der Gebläseradschaufeln entspricht.

Weiterhin ist aus der DE-OS 31 48 369 ein Mähdrescher mit Axialdreschmaschine bekannt, bei dem, in Fahrtrichtung der Maschine gesehen, hinter der Dresch- und Trenntrommel eine Häcksler-Auswerfer-Kombination am Auslaß vorgesehen ist, die sich in gleicher Richtung wie die Dreschtrommel dreht, die abgegebenen Pflanzenteile von den Rotor-Flügelschaufeln abstreift, sie zerhäckselt und nach hinten zu einer Auslaßöffnung wirft, an der eine Streueinrichtung angebracht sein kann. Diese Häcksler-Auswerfer-Kombination wird über ein Riemenvorgelege angetrieben, das mit dem Riemenantrieb für den Rotor in Verbindung steht. Eine niedrigere Häckselgeschwindigkeit kann dadurch erreicht werden, daß der Antriebsriemen über verschiedenartige Riemenscheiben verläuft, während durch eine Magnetkupplung im Häckslerantrieb-Vorgelege der Häcksler wahlweise abgeschaltet werden kann. Die Häcksler-Auswerfer-Kombination dieses bekannten Mähdreschers ist am hinteren Ende neben der Trenntrommel , d.h. achsparallel zur Trommelwelle, angeordnet.

Aufgabe der vorliegenden Erfindung ist es, einen Mähdrescher mit Axialdreschmaschine der eingangs näher genannten Art derart zu verbessern und auszugestalten, daß er eine besonders kompakte Bauweise aufweist, daß das ausgedroschene, vom Mähdrescher abgegebene Gut eine für denjenigen Verwendungszweck gewünschte Länge aufweist und daß die Drehzahl der Häckselanordnung und des Gebläserades für verschiedene Erntegüter individuell einstellbar sind.

Ausgehend von einem Mähdrescher der eingangs näher genannten Art, wird zur Lösung dieser Aufgabe vorgeschlagen, daß die Häckselanordnung und das Gebläserad koaxial zur und drehbar auf der Trommelwelle angeordnet sind und daß die Häckselanordnung und das Gebläserad mit einem eigenen Antrieb versehen sind.

Mit dieser Anordnung wird der Vorteil erzielt, daß die Häckselanordnung und das Gebläserad unterschiedliche Drehzahlen bezüglich der Dreschtrommel aufweisen.

Damit lassen sich die Drehzahlen sowohl der Häckselanordnung als auch des Gebläserades beliebig auf die verschiedenartigen Erntegüter und die gewünschte Zerkleinerung einstellen, wobei gleichzeitig eine besonders kurze Bauweise des Mähdreschers erzielt wird.

Vorteilhafterweise sind die Antriebe sowohl für die Häckselanordnung und das Gebläserad als auch die Dreschtrommel Riemenantriebe, die jeweils über eine ihnen zugeordnete, mit der Welle eines Antriebsmotors verbundenen Riemenscheibe laufen. Den Antriebsriemen sind vorzugsweise Spannrollen zugeordnet, durch deren Andruck an die Antriebsriemen , die   Häckselanordnung mit dem Gebläse bzw. die Trommel betätigt werden. Auf einfache Art und Weise wird dadurch der Vorteil erzielt, daß die Häckselanordnung mit dem Gebläserad zuschaltbar bzw. abschaltbar sind. Bei abgeschalteter Häckselanordnung bleibt das Erntegut, z.B. Getreidestroh, ungehäckselt, wie es z.B. für den nachfolgenden Verarbeitungsschritt durch eine Großballenpresse wünschenswert ist.

Bei einem weiteren bevorzugten Ausführungsbeispiel ist eine lösbare Steckerverbindung zwischen Häckselanordnung und Dreschtrommel vorgesehen, durch deren Einrasten die Häckselanordnung zusammen mit dem Gebläserad mit der Dreschtrommel verbindbar sind.

Durch dieses wahlweise Zuschalten und Ausschalten sowohl der Häckseleinrichtung als auch des Gebläserades auf die Geschwindigkeit der Dreschtrommel kann nach dem Lösen der Antriebsverbindung durch die Spannrollen ein Gleichlauf zwischen Häckselanordnung bzw. Gebläserad und Trenntrommel erfolgen, wie es für spezielle Anwendungsgebiete wünschenswert ist.

Die Häckselanordnung selbst weist Messer und Gegenmesser auf, die sowohl in eine Arbeitsstellung als auch in eine Ruhestellung verschwenkbar sind.

Durch Verschwenken der Messer und der Gegenmesser in ihre Ruhestellung wird der Vorteil erzielt, daß das nach hinten auszuwerfende ausgedroschene Erntegut nicht gehäckselt wird, wie es z.B. für anschließendes Pressen erforderlich ist. Durch einseitiges Einschwenken der Häckselmesser in ihre Arbeitsstellung , jedoch Verschwenken der Gegenmesser in ihre Ruhestellung wird ein gröber gehäckseltes Erntegut erzielt, da nunmehr ein freier Schnitt der Häckselmesser ohne Gegenmesser folgt. Diese Häckselgröße kann für gewisse Erntegüter von Vorteil sein.

Bei einem bevorzugten Ausführungsbeispiel weist die Häckselanordnung eine Scheibe auf, die drehbar an der Trommelwelle gelagert ist, wobei die Scheibe mit einer Vielzahl von Häckselmesserpaaren bestückt ist, wobei jedes Paar an einer Achse befestigt ist, welche ein Langloch in der Scheibe durchsetzt, und neben den Langlöchern Bolzen vorgesehen sind, die die seitliche Schwenkbewegung der Häckselmesser begrenzen und wobei eine Verriegelungsanordnung an der Scheibe vorgesehen ist zur Verriegelung oder Entriegelung der Häckselanordnung in ihre Ruhe- bzw.

Arbeitsstellung.

Durch die erfindungsgemäße Koppelung der beiden Antriebe einmal für die Dreschtrommel und zum anderen für die Häckselanordnung und das Gebläserad, wird ein einfaches Zuschalten und Ausschalten der Häckselanordnung erzielt. Ferner ermöglicht die erfindungsgemäße Maschine eine Variation der Drehzahlen auf verschiedene Erntegüter, sowie eine Variation des ausgedroschenen Erntegutes auf ungehäckselt, teilweise gehäckselt und voll gehäckselt, wobei obendrein noch der Vorteil einer kompakten Bauweise erzielt wird.

Im folgenden wird die Erfindung anhand der Zeichnung näher erläutert, in der ein bevorzugtes Ausführungsbeispiel dargestellt ist. Es zeigen:

Figur 1    eine schematische Seitenansicht eines Mähdreschers mit Axialdreschmaschine;

Figur 2    eine Draufsicht auf das rückwärtige Teil der Axialdreschmaschine mit Gebläserad, Häckselanordnung sowie den Antrieben dafür und

Figuren

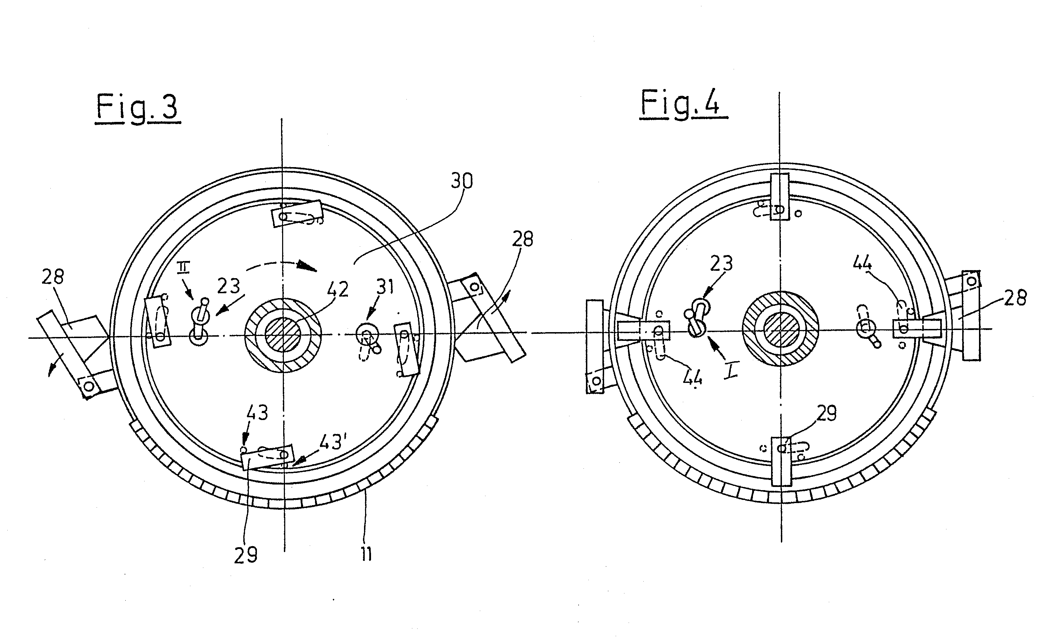

3 und 4    eine Rückansicht auf die Häckselanordnung, wobei Figur 3 eine Anordnung in Ruhestellung
und Figur 4 eine Anordnung in Vollhäcksel-
Stellung darstellen.

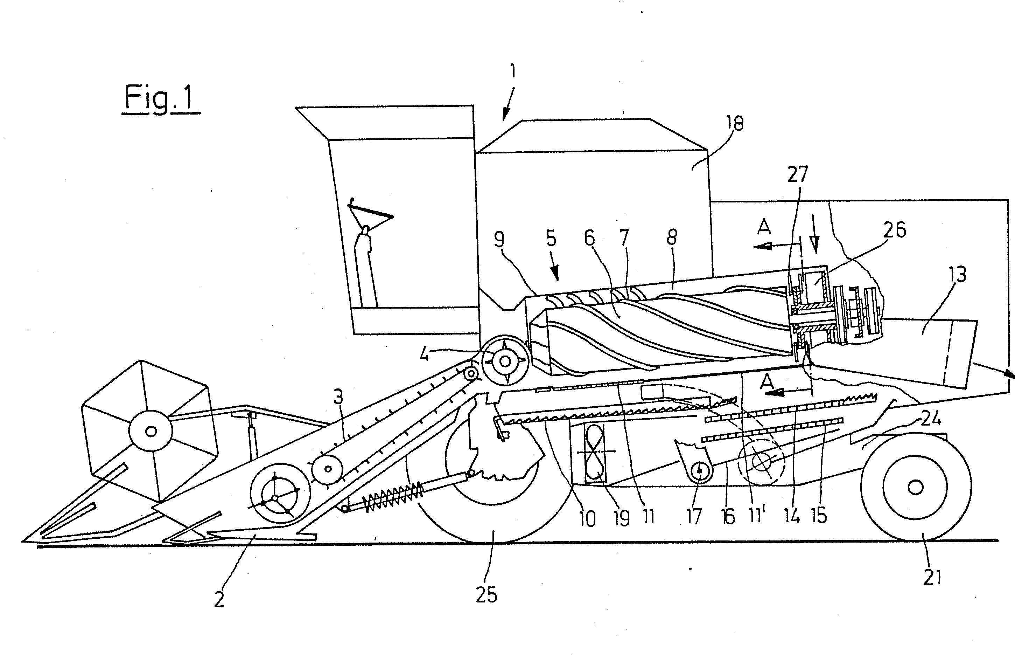

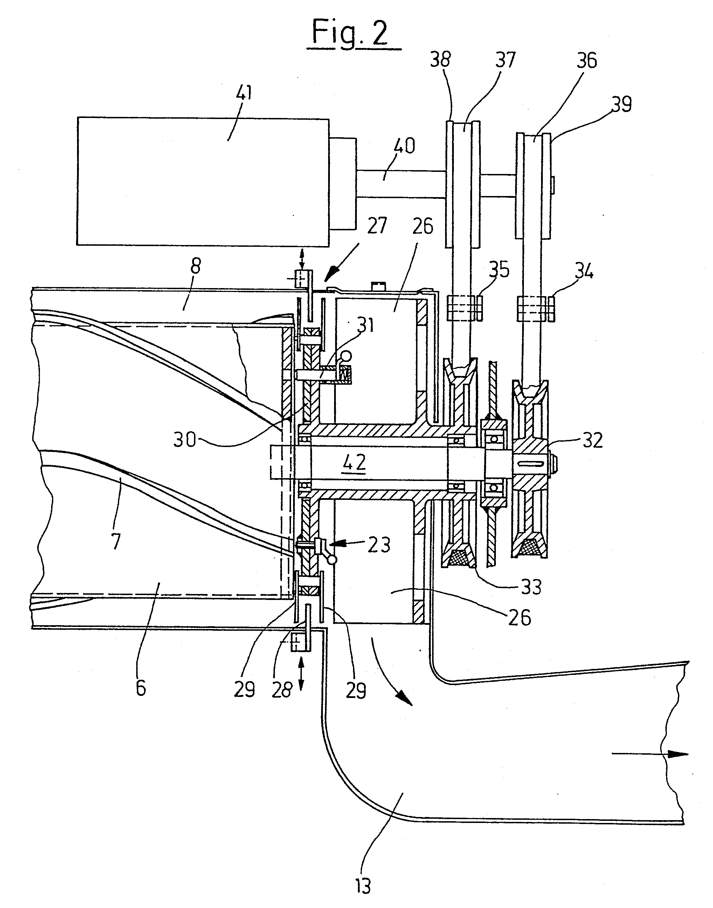

In Figur 1 ist ein selbstfahrender Mähdrescher mit Axialdreschmaschine 1 zum Ernten und Ausdreschen von z.B. Getreide abgebildet. Der Mähdrescher weist an seinem vorderen
Ende im Anschluß ein angedeutetes Schneidwerkzeug 2, und
einen Förderer 3 auf, mit dem das geschnittene Erntegut
in diesem Fall über eine Zuführwalze 4 in die Axialdreschmaschine 5 eingebracht wird. Die Axialdreschmaschine weist
eine Dreschtrommel 6 in Form eines Rotors auf, der von
einem zylindrischen Mantelgehäuse 9 umschlossen ist, wobei der untere Teil des Mantelgehäuses 9 durch eine Dreschkorbanordnung 11 bzw. Trennkorbanordnung 11' gebildet ist. Auf der Dreschtrommel bzw.
dem Rotor 6 sind im Bereich des Dreschkorbes in Schraubenlinien geführte Dreschleisten 7 vorgesehen, die mit im
oberen Bereich und innerhalb des Mantelgehäuses 9 feststehenden und mit ebenfalls schraubenförmigen angeordneten
Leitblechen zusammenwirken. Bei angetriebener Dreschtrommel z.B. durch einen Motor 41 (Figur 2), wird in
diesem Bereich das Erntegut ausgedroschen. Die Körner
fallen hier durch die Löcher des Dreschkorbes bzw. der
Dreschkorbanordnung 11 nach unten auf einen Stufenboden
10, bzw. durch die Löcher des Trennkorbes 11' auf eine Siebeinrichtung 14,15, wobei den Körnern ebenfalls durch das Sieb des Dreschkorbes und des Trennkorbes 11' hindurchfallende Spreu oder sonstige kleine Verunreinigungen beigemengt sind.

Der ebene Stufenboden 10 weist außerdem noch mehrere in Längsrichtung der Dreschmaschine verlaufende Hangleisten auf, durch die die Fläche des Stufenbodens insgesamt mehrfach unterteilt wird. Durch diese Hangleisten wird bei extremen Seitenneigungen des Mähdreschers verhindert, daß Korngut auf dem Siebboden übermäßig seitlich verrutschen kann. Unterhalb des Stufenbodens längs dem das ausgedroschene Korngut mit den Verunreinigungen durch Rüttelbewegungen nach hinten auf die Siebanordnung 14, 15 transportiert wird, ist ein Gebläse 19 vorgesehen, dessen Luftstrom das auf den Sieben der Siebanordnung abgelagerte Korngut durchströmt und so die darin enthaltene Spreu und andere Verunreinigungen entfernt. Das so gereinigte und nach unten aus der Siebanordnung in eine Sammelkammer 16 fallende Korngut wird mit einem Kornförderer 17 in einen Korntank 18 befördert.

Der Mähdrescher ist mit vorderen verhältnismäßig großen Antriebsrädern 25 und mit zwei kleineren hinteren Lenkrädern 21 versehen, die das Fahrgestell 24 tragen. Zwischen der Dreschtrommel 6 und der Trommelwand 9 ist ein

0124628

ringförmiger Spalt 8 gebildet, durch den das nun ausgedroschene Erntegut den rückwärtigen Teil des Mähdreschers zugeführt wird, der teilweise vergrößert und in Draufsicht in Figur 2 dargestellt ist.

Wie diese Figur deutlich erkennen läßt, ist auf der Welle 42 für die Dresch- und Trenntrommel 6 und damit koaxial zu ihr eine Häckselanordnung 27 und ein Gebläserad 26 drehbar angeordnet. Der Antrieb für die Welle 42 der Trenntrommel erfolgt durch einen mit 41 bezeichneten Motor, auf dessen Welle 40 eine Riemenscheibe 39 angeordnet ist. Über diese Riemenscheibe 39 verläuft ein Antriebsriemen 36 , der eine mit der Welle 42 fest verbundene Riemenscheibe 32 antreibt. Auf der Welle 40 des Motors 41 ist ebenfalls eine Riemenscheibe 38 vorgesehen, über die ein Antriebsriemen 37 läuft, der eine Riemenscheibe 33 antreibt, welche mit der Häckselanordnung 27 und dem Gebläserad 26 verbunden ist.

Dies bedeutet, daß je nach den Abmessungen der einzelnen Riemenscheiben die Häckselanordnung 27 mit dem Gebläserad 26 mit unterschiedlicher Drehzahl bezüglich der Welle 42 angetrieben werden kann.

Um die beiden Antriebsriemen 37, 36 in Eingriff mit den Riemenscheiben zu bringen, sind zwei Spannrollen 34, 35 vorgesehen. Durch Andrücken dieser Spannrollen an die zugehörigen Antriebsriemen werden diese in Antriebsverbindung mit den entsprechenden Riemenrädern gebracht. Durch Lösen der Spannrolle 35 kann der Riemen 37 entspannt werden, so daß die Häckselanordnung 27 und das Gebläserad 26 sich nicht mehr zwangsläufig mitdrehen. Um nun für besondere Fälle die Möglichkeit zu gewährleisten, daß die Häckselanordnung 27 mit dem Gebläserad 26 sich mit gleicher Umdrehungsgeschwindigkeit wie die Trommel 6 bewegen, ist eine Steckerverbindung 31 vorgesehen, durch die die Scheibe 30 bzw. das Gebläserad 26 mit der Trommel 6 gekoppelt werden kann. Durch einfaches Verschwenken eines mit dieser Steckerverbindung 31 verbundenen Handgriffs greift diese in entsprechende Aussparungen am rückwärtigen Ende der Trommel 6 ein.

Die Figuren 3 und 4 zeigen einen Schnitt entlang der Linie A-A von Figur 1 und bieten eine Draufsicht auf die Häckselanordnung . Diese weist außer der frei drehbar auf der Welle 42 angeordneten Scheibe 30 eine Feststelleinrichtung 23 auf, mit der sie arretiert werden kann. Ferner sind entlang ihres Umfangs Häckselmesserpaare 29 angeordnet, die jeweils durch eine die Scheibe 30 durchsetzende Achse miteinander verbunden sind. Die Achse durchsetzt dabei jeweils ein Langloch 44, so daß sie um ein Geringes verschiebbar ist. Auf der Scheibe 30 sind ferner Anschlagbolzen 43, 43' vorgesehen, welche den seitlichen Ausschlag der schwenkbaren Häckselmesser 29 begrenzen. Aufgrund der Verschiebung der die Häckselmesserpaare tragenden Achse in den Langlöchern 29 und der Anschlagbolzen 43, 43' können diese Messer in eine Ruhestellung verschwenkt werden, wodurch das nach hinten auszuwerfende Erntegut nicht gehäckselt wird, wie es z.B. erforderlich ist, wenn das Stroh anschließend zu Ballen gepreßt werden soll. Zu diesem Zweck werden dann auch die Gegenmesser 28 verschwenkt, so daß sie eine Ruhestellung einnehmen, in der das aus dem Ringspalt austretende Erntegut völlig ungehäckselt durch die Ausgangsöffnung 13 den Mähdrescher verläßt. Zu diesem Verschwenken der Häckselanordnung wird die Verriegelung 23 manuell von der Position II in Figur 3 in die Position I in Figur 4 verschwenkt, wobei durch Mitnahme der Häckselmesser 29 durch die Anschlagbolzen 43' die in Figur 3 dargestellte Einstellung erreicht wird. Anschließend werden noch die Gegenmesser 28 ausgeschwenkt.

Eine weitere Möglichkeit besteht darin, eine teilweise Häckselung des Erntegutes zu erzielen, indem die Häckselmesser 29 in ihre inFigur 4 dargestellte Schneidstellung verschwenkt werden, jedoch die Gegenmesser 28 ihre in Figur 3 dargestellte Ruhestellung einnehmen; hierdurch erfolgt ein freier Schnitt ohne Gegenmesser, wodurch ein gröberes Häckselgut erzielt wird.

Mit dem erfindungsgemäßen Mähdrescher mit Axialdreschmaschine lassen sich also die Antriebe sowohl für die Trenntrommel als auch für die Häckselanordnung getrennt einstellen. Ein beliebiges Zuschalten und Ausschalten der Häckseleinrichtung mit unterschiedlicher Häckselwirkung ist ohne weiteres erreichbar. Aufgrund der konzentrischen Bauweise auf der Trommelwelle wird ein insgesamt kompakte kurze Bauweise der Axialdreschmaschine erzielt. Eine Variation der Länge des auftretenden Erntegutes kann von ungehäckselt über teilweise gehäckselt bis zu voll gehäckselt erzielt werden.

1 0949 ch

Klöckner-Humboldt-Deutz AG Zweigniederlassung Fahr,

7702 Gottmadingen

Mähdrescher mit Axialdreschmaschine

P a t e n t a n s p r ü c h e

1. Mähdrescher mit Axialdreschmaschine, mit einer Mähvorrichtung, einem sich daran anschließenden Förderer
für das geschnittene Erntegut, einer in einem Trommelgehäuse angeordneten rotierenden Dresch- und Trenntrommel zum Axialdrusch des Erntegutes, einer Einbringvorrichtung zum Einbringen des vom Förderer angelieferten Erntegutes in das Trommelgehäuse, einer
der Dresch- und Trenntrommel nachgeordneten Häckseleinrichtung sowie ein Gebläserad zum Auswerfen des
ausgedroschenen Erntegutes, dadurch gekennzeichnet,
daß die Häckselanordnung (27) und das Gebläserad (26)
koaxial zur und drehbar auf der Welle (42) der Dresch-
und Trenntrommel angeordnet sind, und daß die Häckselanordnung und das Gebläserad mit einem eigenen unabhängig vom Antrieb für die Trommelwelle (42) antreibbaren Antrieb versehen sind.

2. Mähdrescher mit Axialdreschmaschine nach Anspruch 1, dadurch gekennzeichnet, daß die Antriebe Riemenantriebe (36, 37) sind, die jeweils über eine ihnen zugeordnete mit der Welle (40) eines Antriebsmotors (41) verbundenen Riemenscheibe (38, 39) und über eine mit der Welle (42) der Dresch- und Trenntrommel verbundenen Riemenscheibe (32 bzw. 33) laufen.

3. Mähdrescher mit Axialdreschmaschine nach Ansprüchen 1 und 2, dadurch gekennzeichnet, daß den Antriebsriemen (37, 36) Spannrollen (35, 34) zugeordnet sind, durch deren Andruck an die Antriebsriemen diese die Häckselanordnung (27) mit dem Gebläserad (26) bzw. die Trommel (6) betätigen.

4. Mähdrescher mit Axialdreschmaschine nach Anspruch 1, dadurch gekennzeichnet, daß eine lösbare Steckerverbindung (31) zwischen der Häckselanordnung (27) und dem rückwärtigen Teil der Dresch- und Trenntrommel (6) vorgesehen ist, durch deren Einrasten die Häckselanordnung (27) und das Gebläserad (26) mit der Dresch- und Trenntrommel (6) verbindbar sind.

5. Mähdrescher mit Axialdreschmaschine nach Ansprüchen 1 bis 4, dadurch gekennzeichnet, daß die Häckselanordnung (27) Messerpaare (29) und Gegenmesser (28) aufweist, die jeweils in eine Ruhestellung bzw. Arbeitsstellung verschwenkbar sind.

6. Mähdrescher mit Axialdreschmaschine nach einem der vorhergehenden Ansprüche, dadurch gekennzeichnet, daß die Häckselanordnung eine Scheibe (30) aufweist, die drehbar an der Trommelwelle (42) gelagert ist, daß an der Scheibe (30) eine Vielzahl von Häckselmesserpaaren (29) an Achsen befestigt sind, welche Langlöcher (44) in der Scheibe (30) durchsetzen, daß neben den Langlöchern (44) Anschlagbolzen (43, 43') vorgesehen sind, die die Schwenkbewegung der Häckselmesser (29) begrenzen und daß eine Steckerverbindung (31) vorgesehen ist, zur Verbindung der Häckselanordnung mit der Trommel (6) sowie eine Feststelleinrichtung (31) vorgesehen ist, zur Arretierung der Scheibe (30).

Fig.1

0124628

Fig. 2

Fig.3

Fig.4

0124628

Europäisches
Patentamt

**EUROPÄISCHER RECHERCHENBERICHT**

**0124628**
Nummer der Anmeldung

EP 83 10 4397

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,X | DE-A-2 835 899  (DEERE)<br>* Seite 45, letzter Abschnitt - Seite 46, Zeile 27; Seite 56, Zeilen 3-12; Figuren 1,4 *<br><br>--- | 1,2 | A 01 F  12/40<br>A 01 F  7/06 |
| A | DE-B-1 264 132<br>(MASSEY-FERGUSON)<br>* Insgesamt *<br><br>----- | 1,5 | |

RECHERCHIERTE SACHGEBIETE (Int. Cl. ³)

A 01 F

Der vorliegende Recherchenbericht wurde für alle Patentansprüche erstellt.

| Recherchenort<br>DEN HAAG | Abschlußdatum der Recherche<br>03-01-1984 | Prüfer<br>DE LAMEILLIEURE D. |
|---|---|---|

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503 03 82